**Europäisches Patentamt**

**European Patent Office**

**Office européen des brevets**

(19)

(11) Veröffentlichungsnummer : **0 244 875 B1**

(12) # EUROPÄISCHE PATENTSCHRIFT

(45) Veröffentlichungstag der Patentschrift :
**18.12.91 Patentblatt 91/51**

(51) Int. Cl.$^5$ : **F02D 19/02**

(21) Anmeldenummer : **87106739.3**

(22) Anmeldetag : **08.05.87**

(54) **Verfahren und Vorrichtung zur Leistungsregelung von Flüssiggas (LPG) betriebenen Brennkraftmaschinen.**

(30) Priorität : **09.05.86 DE 3615679**

(43) Veröffentlichungstag der Anmeldung :
**11.11.87 Patentblatt 87/46**

(45) Bekanntmachung des Hinweises auf die Patenterteilung :
**18.12.91 Patentblatt 91/51**

(84) Benannte Vertragsstaaten :
**AT DE FR GB NL**

(56) Entgegenhaltungen :
**DE-A- 3 305 680**
**DE-A- 3 327 699**
**GB-A- 2 152 581**
**JP-U- 5 060 424**

(73) Patentinhaber : **Klöckner-Humboldt-Deutz Aktiengesellschaft**
**Deutz-Mülheimer-Strasse 111 Postfach 80 05 09**
**W-5000 Köln 80 (DE)**

(72) Erfinder : **Schäle, Wolf-Andreas**
**Kiefernweg 22**
**W-5060 Bergisch Gladbach 2 (DE)**

## Beschreibung

Mit der Erfindung wird ein Verfahren und eine Vorrichtung zur Leistungsregelung vorgestellt für mit Flüssiggas, Hauptbestandteile Propan/Butan (LPG) betriebene brennkraftmaschinen, insbesondere Otto-Gasmotoren, wobei das Flüssiggas in einem Verdampfer in den gasförmigen Zustand gebracht wird und danach im Gasmischer mit Luft vermischt wird, bevor es in die Brennkraftmaschine gelangt.

Für verschiedene Einsatzfälle, wie Gabelstaplerbetrieb in Werkshallen, in denen eine hohe Abgasgüte gefordert wird und ein Elektroantrieb ausscheidet, beispielsweise wegen nicht ausreichender Verfügbarkeit, bieten sich Brennkraftmaschinen an, die mit Flüssiggas betrieben werden; ebenso dort, wo ein hohes Aufkommen an Flüssiggas vorhanden ist und sich daher der Einsatz von Brennkraftmaschinen mit Flüssiggasbetrieb anbietet.

Bekannt sind Otto-Gasmotoren, deren Verbrennungsgemisch, Luft-Gasgemisch, von der Brennkraftmaschine direkt aus dem Gasmischer angesaugt wird. Hierbei wird kein Einfluß auf die Flüssiggaszusammensetzung und damit den Heizwert genommen, und damit auch nicht auf die Leistungseinstellung der Brennkraftmaschine. Folglich ändert sich die Leistung proportional zum Heizwert des Propan/Butan-Gemisches. Da weder eine deutsche noch europäische Norm für Flüssiggase als Kraftstoff besteht, ist die Zusammensetzung der Flüssiggase oft von Land zu Land und nach Jahreszeit unterschiedlich. Die Hauptbestandteile Propan und Butan können im Mischungsverhältnis von 100 zu 0 % bis 20 zu 80 % schwanken. In Abhängigkeit von dem Butananteil steigt dabei auch der spezifische, volumenbezogene Heizwert bis zu 25 % an. Gleichzeitig damit verbunden fällt mit steigendem Butananteil die Oktanzahl um bis zu 13 Einheiten ROZ (Research Oktanzahl) ab und damit verringert sich auch die Klopffestigkeit des Kraftstoffes wesentlich.

Für den Betrieb der Brennkraftmaschine in der Praxis bedeutet das, daß beispielsweise eine mit 100 % Propan auf Nennleistung eingestellte Brennkraftmaschine bei Betrieb mit 20/80 % Propan/Butan eine Mehrleistung von ca. 25 % besitzt. Die thermische Mehrbelastung kann dadurch kritisch oder gar untragbar für die Brennkraftmaschine werden. Hinzu kommt, daß die reduzierte Oktanzahl zum Motorklopfen bei Vollast führen kann. Beide Faktoren zusammen können erhebliche, bleibende Schäden verursachen und zum Ausfall der Brennkraftmaschine führen.

Außerdem ergibt sich im Teillastbereich das Problem, daß aufgrund des unterschiedlichen stöchiometrischen Luftbedarfs von Propan und Butan das Verbrennungsluftverhältnis $\lambda_v$ beispielsweise bei zunehmendem Butan-Anteil kleiner wird. Dies hat zur Folge, daß die Schadstoffemission stark ansteigt.

Aus der DE-A- 33 05 680 ist eine Vorrichtung zum Regeln der Treibstoffzufuhr für mit Flüssiggas betriebene Brennkraftmaschinen in Abhängigkeit des Heizwertes bekannt. Der Aufbau sieht dazu eine zwischen dem Verdampfer und dem Vergaser eingesetzte Vorrichtung vor, die zwei Ventileinrichtungen umfaßt. Jede Ventileinrichtung wird von einer der zwei Zustandsgrößen oder Druck und Temperatur des gasförmigen Kraftstoffs beaufschlagt. Die Vorrichtung bewirkt gemeinsam die Kraftstoffzumessung für die Brennkraftmaschine. Diese bekannte Vorrichtung zeigt einen aufwendigen Aufbau mit einer Vielzahl von notwendigen Einstellungen verbunden mit einem hohen Wartungsaufwand.

Die der Erfindung zugrunde liegende Aufgabe besteht darin, eine kompakt bauende, wenig Bauteile umfassende Vorrichtung darzustellen, die wirkungsvoll einen dauerhaften Motorbetrieb gewährleistet mit einer weiteren Maßgabe, die Schadstoffemission im gesamten Betriebsbereich der Brennkraftmaschine nicht zu verschlechtern, sowie durch einfache Einstellung eine hohe Verfügbarkeit der Brennkraftmaschine sicher zu stellen.

Diese Aufgabe wird durch die im Anspruch 1 aufgeführten Merkmale gelöst.

Mit diesen Merkmalen wird eine Regelung der zugeführten Flüssiggasmenge in Abhängigkeit vom Heizwert ermöglicht. Damit kann die Brennkraftmaschine unabhängig von der Flüssiggaszusammensetzung, d.h. bei sich verändernden Propan/Butan-Anteilen optimal betrieben werden. Erreicht wird dieses Ziel, indem die aszustandswerte, der Flüssggasdruck und die Flüssiggastemperaturen, auf eine Zumeßeinrichtung übertragen werden. Erforderliche korrekturen werden entsprechend der spezifischen Dampfdruckkurven des Flüssiggases vorgenommen. Die Mischungsanteile sind mit Hilfe der Dampfdruckkurven bestimmbar, da sich jedes Propan/Butan-Gemisch auf dieser Zustandslinie bewegt. Die Messung von Druck und Temperatur führt zur Identifizierung des Flüssiggasgemisches. Durch eine Übertragung der Gaszustandswerte auf die Zumeßeinrichtung läßt sich eine vorteilhafte, der Brennkraftmaschine zuträgliche Gasmenge einstellen. Ein weiterer Vorteil, der sich durch die erfindungsgemäße Gasmengenregelung in Abhängigkeit der Gasgemischkomponenten und damit des Heizwertes einstellt, ist die Abgasqualität, die sich selbst bei zunehmenden Butananteilen und dem damit verbundenen höheren Luftbedarf insbesondere im Teillastbereich nicht wesentlich verschlechtert. Die Zumeßeinrichtung steuert bei solch geänderten Verhältnissen die Gasmenge so, daß dieser Effekt nahezu vermieden wird.

Als erfindungsgemäße Zumeßeinrichtung ist ein Kompensationsventil vorgesehen. Eingesetzt in die Verbindungsleitung zwischen dem Verdampfer und dem Luftmischer kann durch das Kompensationsventil direkt die Gasmenge dosiert und geregelt werden. Das Kompensationsventil dient als Regelventil bzw. Drosselelement, das je nach der Gaszusammensetzung und dem damit verbundenen stöchiometrischen Luftbedarf angesteuert wird und damit die Gasmenge in der Niederdruckgasleitung zwischen Verdampfer und Motor regelt.

Die Vorrichtung sieht auch vor, daß das Kompensationsventil einen speziell gestalteten variablen Drosselquerschnitt aufweist. Die Querschnittsgeometrie ist beispielsweise so abstimmbar, daß bei Normbedingungen (z.B. DIN 70 020, die sich auf eine Umgebungstemperatur und Gastemperatur von 20 °C bezieht,) für alle angesprochenen Flüssiggasgemische eine einheitliche Motornennleistung erreicht. Weiter bietet diese Möglichkeit eine Anpassung der Durchtrittsgeometrie an die Zusammensetzung des Flüssiggases.

Eine Weiterbildung dieses Gedankens sieht vor, daß als Stellgröße für die Veränderung des Durchtrittsquerschnittes eine direkte Übertragung des Flüssiggasdruckes auf den Kolben des Kompensationsventils dient. So kann ohne großen Installationsaufwand jederzeit die sich bei verändernden Mischungsverhältnissen im Flüssiggas ergebende Gasdruckänderung zur Anpassung an die der Brennkraftmaschine zugeführte Gasmenge genutzt werden.

Die Erfindung sieht darüber hinaus auch eine Einflußnahme durch die Flüssiggastemperatur vor, durch die eine zusätzliche Verstellung des Kompensationsventils erreicht wird.

Mit dieser Möglichkeit wird in Verbindung mit der Flüssiggasdrucksteuerung eine genaue Regelung des Gasvolumenstroms durch das Kompensationsventil erreicht. Gedacht ist dabei beispielsweise an ein Kompensationsventil, ausgelegt als verdrehbares Kolbenventil, bei dem die Durchtrittsgeometrie mit einer Steuerkante versehen ist. Auf den federbelasteten Kolben wirkt der Flüssiggasdruck. Die Verdrehung des Kolbens kann mit Hilfe von Übertragungsorganen erreicht werden, die bei sich verändernden Flüssiggastemperaturen eine Kolbenverdrehung vornehmen.

Vorteilhaft ist eine Durchtrittsgeometrie, die mit einer Schrägkante versehen ist. Insbesondere bei einer gleichzeitig erfolgten hubveränderung und Verdrehung des Kolbens im Kompensationsventil wird durch eine Schrägsteuerkante eine gut bestimmbare Zumessung des durchtretenden Gasstromes erreicht.

In besonderer Ausgestaltung der Erfindung wird vorgeschlagen, als Übertragungsorgan zur Verstellung des Kolbens im Kompensationsventil Meßwertumformer einzusetzen. Temperaturgeber und Druckaufnehmer im Flüssiggasbehälter übertragen die Meßwerte auf die Meßwertumformer zur Verstellung des Kolbens im Kompensationsventil. Durch einen Abgleich der Meßwerte mit Vorgabewerten, die z.B. den Dampfdruckkurven der Flüssiggase entsprechen, wird durch die Meßwertumformer eine Verstellung, d.h. Verdrehung und/oder Verschiebung in axialer Richtung des Kolbens erreicht.

Der Anspruch 1 sieht vor, daß unmittelbar an das Kompensationsventil ein Stellmagnet angeflanscht ist. Erfindungsgemäß ist dabei an einen Magnet gedacht, der gastemperaturabhängig wirkt und eine überlagernde Kraft auf den Kolben ausübt. Damit wirkt der Stellmagnet der Kraft bei einem Teperaturanstieg entgegen, die durch den Flüssiggasdruck auf den Kolben ausgeübt wird. Der Stellmagnet kompensiert damit den Gastemperatureinfluß bei einer Gasmengenregelung, die vorrangig in Abhängigkeit vom Flüssiggasdruck erfolgt.

Weiter ist an eine Übertragung auf Dual/FUEL-Brennkraftmaschinen gedacht. Diese Brennkraftmaschinen werden mit zwei Brennstoffen, insbesondere einem flüssigen und einem gasförmigen Brennstoff betrieben. Auch hierfür bietet sich das in Abhängigkeit von der Flüssiggaszusammensetzung regelnde und die Gasmenge zumessende Kompensationsventil an, um Heizwertschwankungen im Flüssiggas und damit Leistungsunterschiede zu unterbinden.

Weitere Merkmale ergeben sich aus der folgenden Zeichnungsbeschreibung, in der bevorzugte Ausführungsbeispiele der Erfindung schematisch dargestellt sind sowie erläuterternde Diagramme vorgestellt werden. Es zeigt:

Fig. 1 den schematischen Aufbau der Flüssiggaszuführung einer Brennkraftmaschine mit dem erfindungsgemäßen Kompensationsventil,

Fig. 2 die Schnittzeichnung durch das Kompensationsventil,

Fig. 3 eine schematischen Aufbau der Flüssiggaszuführung, ähnlich Fig. 1, jedoch mit einer zusätzlichen Verstellmöglichkeit der Zumeßeinrichtung durch die Flüssiggastemperatur,

Fig. 4 in einer Schnittdarstellung das Kompensationsventil mit angeflanschtem Stellmagnet,

Fig. 5 Dampfdruckkurven,

Fig. 6 Verlauf der Nennleistung in Abhängigkeit von der Flüssigkeitszusammensetzung.

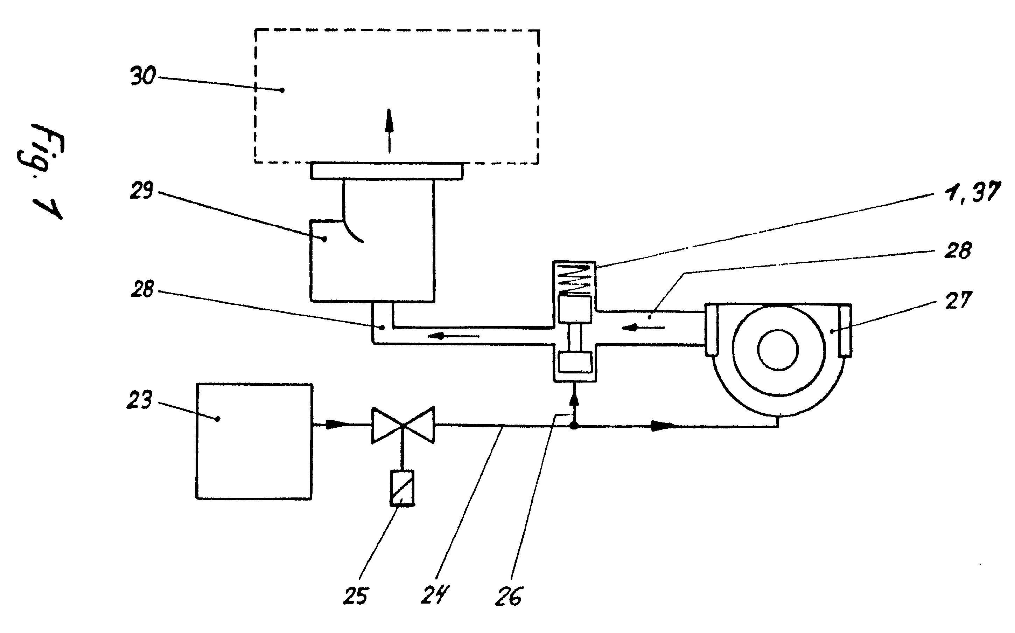

Der in Fig. 1 gezeigte schematische Aufbau zeigt alle Bauteile für mit Flüssiggas betriebene Brennkraftmaschinen zur Aufbereitung und Zuführung des Flüssiggases sowie des neuen, durch die Erfindung vorgestellten Kompensationsventils.

Das im Gasbehälter 23, dem Vorratsbehälter für die Brennkraftmaschine 30 befindliche Flüssiggas gelangt durch die Flüssiggasleitung 24 zum Verdampfer 27, in dem das Flüssiggas von der Flüssigphase in die Gasphase gebracht wird. In die Flüssigleitung 24 ist unmittelbar hinter dem Gasbehälter 23 ein Magnetventil 25 geschaltet, das die Gaszufuhr unterbrechen kann. Das Magnetventil 25 kann auch als Sicherheitsorgan eingesetzt werden, beispielsweise in der Form, daß es bei Überdruck oder zu hohem Gasdurchfluß, z.B. durch ein Leck in dem Leitungssystem, den Gasfluß direkt unterbrechen kann. Zwischen Magnetventil 25 und dem Verdampfer 27 befindet sich in der Flüssiggasleitung 24 ein Abzweig verbunden mit der Druckleitung 26, durch die der Gasdruck auf die Zumeßeinrichtung 37, das Kompensationsventil 1 übertragen wird. Das aus dem Verdampfer 27 austretende, in den Gaszustand gebrachte Gas gelangt durch die Gasleitung 28 in das Kompensationsventil 1. Der Öffnungsquerschnitt im Kompensationsventil 1 ist damit insbesondere vom Flüssiggasdruck regelbar. Und damit kann die Flüssiggaszusammensetzung Einfluß auf die Gasmenge, die der Brennkraftmaschine zuströmt, nehmen. Die Brennkraftmaschine 30, die in dem vorliegenden Schema vereinfacht als Rechteck dargestellt ist, saugt das durch das Kompensationsventil 1 zugemessene Gas an, das im Gasmicher 29 mit Luft versetzt wird und als Gas-Luft-Gemisch in die Brennkraftmaschine 30 zur dortigen Verbrennung gelangt.

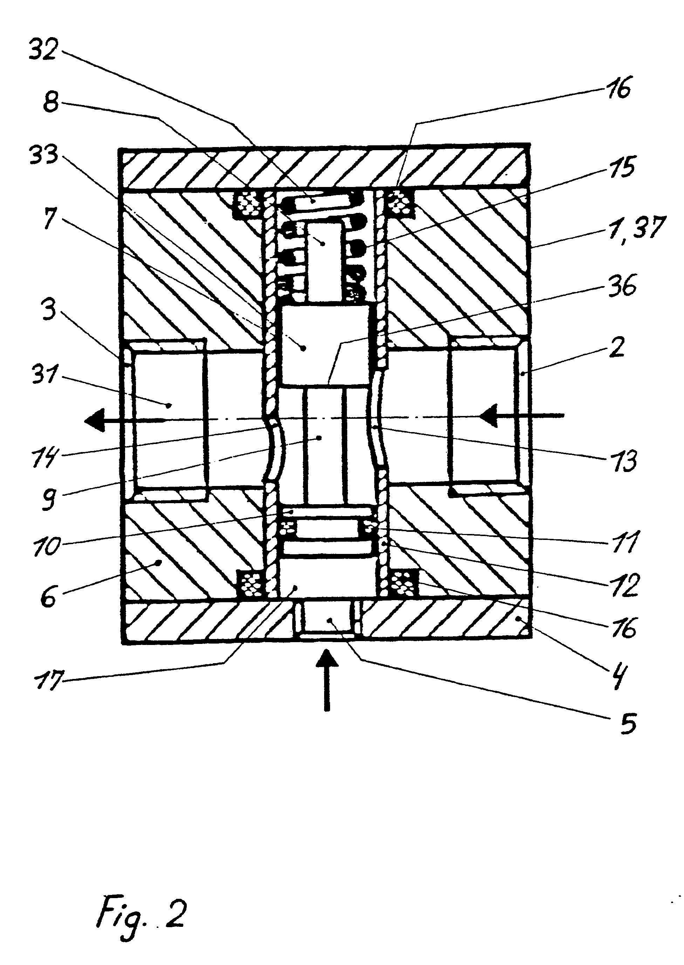

Die Fig. 2 zeigt in einer Schnittdarstellung das Kompensationsventil 1. Das Ausführungsbeispiel zeigt eine in der Außenkontur zylindrisch ausgeführte Zumeßeinrichtung 37, das Kompensationsventil 1, bestehend aus dem Gehäuse 4 und dem darin befindlichen Innenteil 6. Ebenso kann die Außenkontur des Kompensationsventils 1 rechteckig ausgeführt sein bzw. in einer anderen beliegenden geometrischen Form ausgebildet sein. Das Innenteil 6 besitzt eine axiale Bohrung 31, durch die das Gas geführt wird. Das Gas tritt im Eintritt 2 vom Verdampfer 27 kommend ein und gegenüberliegend durch den Austritt 3 aus dem Kompensationsventil 1 heraus. Mittig im Kompensationsventil 1 in einer radialen Bohrung 32, die axiale Bohrung 31 kreuzend, ist der Zylinder 12 eingebracht. Der Zylinder 12, in das Innenteil 6 durch die Abdichtung 16 dichtend angeordnet und radial mit dem Innenteil 6 bündig abschließend, dient zur Aufnahme des Kolbens 7. In Richtung der axialen Bohrung 31 besitzt der Zylinder 12 Öffnungen, den Zylindereintritt und den Zylinderaustritt. Der Zylindereintritt 13 ist in Richtung des Eintritts 2 angebracht, der Zylinderaustritt 14 zum Austritt 3 ausgerichtet. Zur Erzielung einer vielfältigen Durchtrittsgeometrie sind der Zylindereintritt 13 und der Zylinderaustritt 14 verschieden gestaltet und in unterschiedlichen Lagen zueinander angeordnet. Die Steuerkante 36 am Kolbenoberteil 33 an der zum Kolbenunterteil 10 gerichteten Seite gibt je nach der durch den Gasdruck vorgegebenen Stellung einen bestimmten Teil dieser Öffnung frei. Dadurch kann ein definierter Gasvolumenstrom durch das Kompensationsventil 1 zur Brennkraftmaschine 30 strömen. Der Kolben 7 wird mit dem Flüssigkeitsgasdruck, der im Druckraum 17 ansteht, beaufschlagt. Durch den Eintritt 5 im Gehäuse 4 des Kompensationsventils 1 befindlich wird durch die Druckleitung 26 und die Flüssiggasleitung 24 der Flüssigkeitsdruck aus dem Gasbehälter 23 auf den Druckraum 17 übertragen. Der kolben 7 besitzt über einen Bereich, der größer als der Zylindereintritt 13 ist, eine starke Verjüngung, die als Verbindung 9 gekennzeichnet ist und den kolben in ein Unterteil 10 und ein Oberteil 33 teilt. Die Verjüngung des kolbens 7 ist soweit durchgeführt, daß der Durchströmquerschnitt gleich oder größer dem Querschnitt des Zylindereintritts 13 ist. Durch eine Verstellung des kolbens 7 kann der Querschnitt des Zylindereintritts 13 verändert und die damit durch das kompensationsventil 1 strömende Gasmenge geregelt werden. Der im Druckraum 17 anstehende Flüssiggasdruck wirkt gegen eine am kolben gegenüberliegend angeordnete Druckfeder 15. Die Führung 8 ist für die Druckfeder 15 gedacht und hat weiter die Aufgabe, den Verstellweg des kolbens 7 zu begrenzen, bei Anlage der Führung 8 am Gehäuse 4. Das kolbenunterteil 10 ist zum Druckraum 17 durch die Abdichtung 11 abgedichtet.

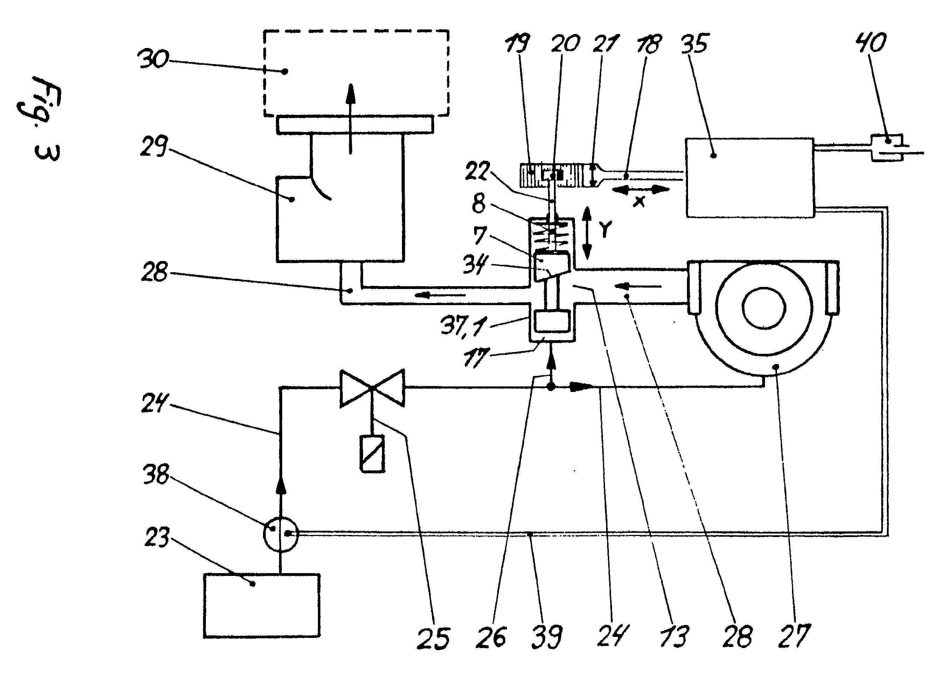

In Fig. 3 ist ein weitestgehend identischer Aufbau einer Flüssiggaszuführung für eine Brennkraftmaschine dargestellt wie in Fig. 1. Abweichend von Fig. 1 ist eine weitere Verstellmöglichkeit der Zumeßeinrichtung 37 durch die Flüssiggastemperatur aus dem Gasbehälter 23 vorgesehen. Durch den Temperaturgeber 38 und die elektrische Verbindung 39 wird dem Meßwertumformer die Flüssiggastemperatur übertragen. Dabei kann der Temperaturgeber 38 die Temperatur im Flüssiggasbehälter 23 oder unmittelbar hinter diesem in der Flüssiggasleitung 24 messen. Der Meßwertumformer 35 ist mit der Spannungsquelle 40 verbunden.

Zwischen den Vorgabewerten des Meßwertumformers 35 und den Meßwerten erfolgt ein Abgleich. Erforderliche korrekturen werden vom Meßwertumformer 35 mit Hilfe eines integrierten Stellmagneten auf das Kompensationsventil 1 übertragen.

Als Übertragung dient die mit dem Meßwertumformer 35 verbundene Zahnstange 18, die am Ende mit der Verzahnung 19 versehen ist. In die Verzahnung 19 greift das Zahnrad 20 ein, das sich an der Welle 22 befindet, die eine Verlängerung der Führung 8 darstellt. Die in Richtung X bewegbare Zahnstange 18 bewirkt eine Verdrehung des Kolbens 7, der über die Führung 8, die Welle 22, das Zahnrad 20 und die Zahnstange 18 miteinander in Verbindung stehen. Der Kolben 7 besitzt eine Schrägsteuerkante 34, die bei Verdrehung den Querschnitt des Zylindereintritts 13 verändert. Weiter kann der Kolben 7 vertikal in Richtung Y vom im Druckraum 17 anstehenden Gasdruck verschoben werden. Um den entsprechenden Betrag einer möglichen vertikalen Verschiebung nach Y ist auch die Verzahnungsbreite 21 der Zahnstange 18 ausgelegt. Mit der Möglichkeit, das Kommpensationsventil 1 getrennt voneinander durch zwei Regeleinrichtungen vorzunehmen, die von verschiedenen Stellgrößen beeinflußt werden aber gleichzeitig die Stellung und die Lage des Kolbens

4

7 verändern können, kann eine genauere und besser abgestimmte Gasmengendosierung für die Brennkraftmaschine 30 vorgenommen werden.

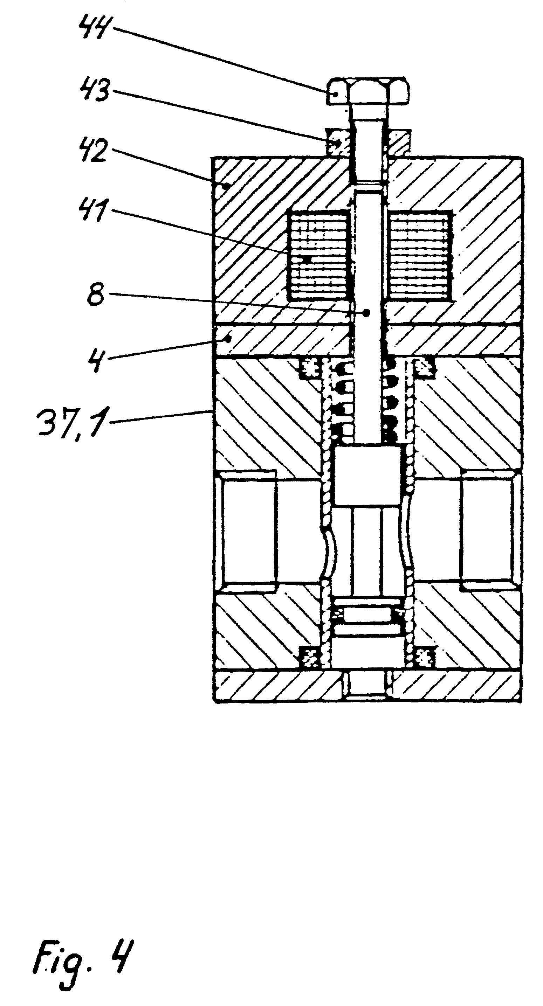

Fig. 4 zeigt im Schnitt das Kompensationsventil 1, wie in der Beschreibung zu Fig. 2 bereits näher erläutert, das mit einem integrierten Stellmagnet 41 versehen ist. Dieses befindet sich nahezu mittig im Magnetgehäuse 42, welches einseitig am Gehäuse 4 angeflanscht ist. Die Führung 8 ist durch das Gehäuse 4 verlängert und durch den Stellmagneten 41 hindurch weitergeführt bis zu dem Anschlag, den die Stellschraube 44 bildet. Auf gleicher Achse mit der Führung 8 liegend ist die Stellschraube 44 von außen in das Magnetgehäuse 42 geschraubt. Mit Hilfe der Kontermutter 43 kann die Einschraubtiefe der Stellschraube 44 eingestellt werden. Der Stellmagnet 41 soll den Gastemperatureinfluß bei Kompensationsventilen ausgleichen, deren Stellgröße der Flüssiggasdruck ist.

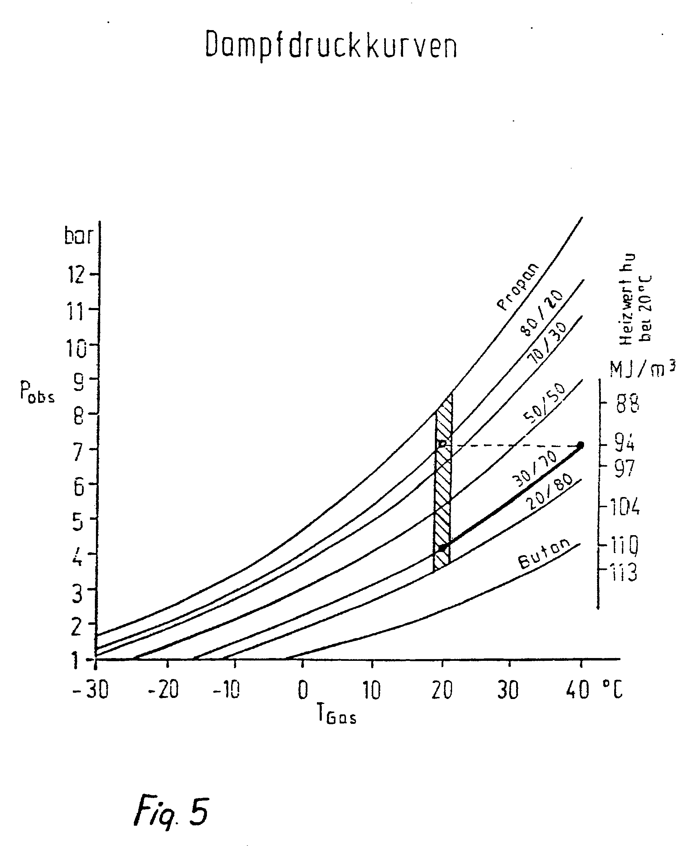

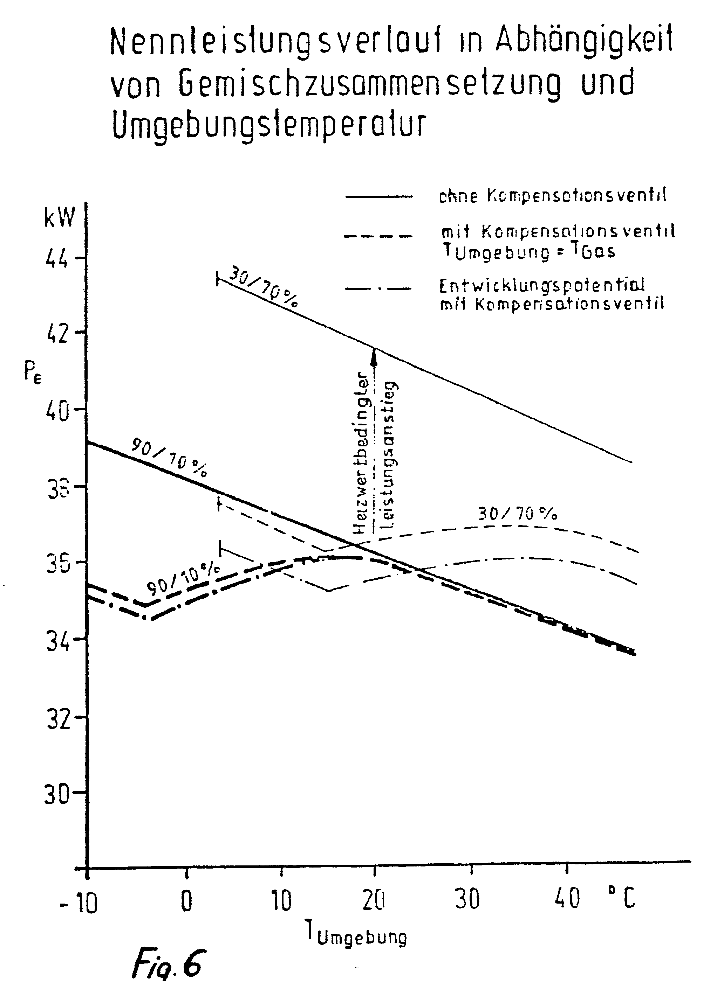

Die Dampfdruckkurven in Fig. 5 zeigen die Heizwertänderungen in Abhängigkeit von der Flüssiggaszusammensetzung mit den Hauptanteilen Propan und Butan. Deutlich hervorgehoben sind die Grenzmischungsverhältnisse, die aufgrund einer fehlenden Normung auftreten können und von einem Propan/Butan-Anteil von 100/0 % bis zu 20/80 % reichen können. Ein Beispiel, daß die Temperatur-Druck-Abhängigkeit des Flüssiggasgemisches verdeutlicht, ist in dem Kurvenverlauf eingetragen. Bei einem 30/70 %-Gemisch zum Beispiel steigt der Druck von 4,1 Bar bei 20 °C auf 7 Bar bei 40 °C an. Der Volumenstrom in einem ausschließlich druckgesteuerten Kompensationsventil 1 entspricht dann dem eines 80/20 %-Gemisches bei 20 °C. Die dem Motor zugeführte Brennstoffenergie nimmt damit zu. Diese Tatsache wird genutzt, um die Gemischliefergradeinbuße (Leistungsabnahme) von 20 °C auf 40 °C auszugleichen. Speziell bei einer luftgekühlten Brennkraftmaschine mit ihrer Umgebungstemperaturabhängigkeit (Kühlluft und Verbrennungsluft) gelingt dies sehr gut, wie auch im Diagramm der Fig. 6 deutlich sichtbar wird. Das zuvor genannte Beispiel hat jedoch eine unvermeidbare Gemischanfettung zur Folge, da die Luftmenge konstant bleibt. Um den $\lambda_v$-Bereich, in dem der Motor folglich betrieben wird, einzuengen, wird der Verstellweg des Kolbens 7 für den bei der Gastemperatur von 20 °C minimal notwendigen Dampfdruckbereich der Gasgemische begrenzt. Der Arbeitsbereich des Kompensationsventils 1 ist erkennbar an den Knickstellen im Kurvenverlauf gemäß Fig. 6. Außerhalb dieses Bereichs entspricht die Motorcharakteristik der des Motors ohne Heizwertanpassung. Die bei der Kompensation der liefergradbedingten Leistungsänderung des Motors zugrunde liegende Annahme, daß sich Gas- und Umgebungslufttemperatur näherungsweise gleich verhalten, dürfte überwiegend zutreffen, wenn sich Motor und Flüssiggasbehälter in einem Raum oder gemeinsam im Fahrzeug befinden. Von dieser Annahme kann beispielsweise ein flüssiggasgetriebener Gabelstapler abweichen, der vom Freien (T=20 °C) in ein Kühlhaus (T=-20 °C) fährt, der Flüssgkeitsgasdruck in dem Gasbehälter 23 bleibt zunächst konstant, der Gemischliefergrad und die maximale Leistung der Brennkraftmaschine steigen jedoch an. Das Temperaturverhalten entspricht dann dem einer Brennkraftmaschine ohne Kompensationsventil (siehe Diagramm Fig. 6). Der Leistungsanstieg ist in Anbetracht der Kühllufttemperatur insbesondere für Luftgekühlte Brennkraftmaschinen unkritisch.

Um jedoch mit dem Kompensationsventil 1 die Regelung noch zu verfeinern und über einen weiteren Bereich zu ermöglichen, ist nach dem Erfindungsgedanken auch an eine Einrichtung gedacht, durch die die Flüssiggastemperatur mit Hilfe von Übertragungsmitteln, z.B. Meßwertumformern, Einfluß auf die Regelung und damit auf die das Kompensationsventil hindurchströmende Gasmenge nehmen kann.

Insbesondere ist diese Einrichtung für Kompensationsventile vorgesehen, deren Gasmengenregelung vorrangig in Abhängigkeit vom Flüssiggasdruck erfolgt.

## Patentansprüche

1. Vorrichtung zur Leistungsregelung für mit Flüssiggas, Hauptbestandteile Propan/Butan (LPG-Liquid Petrol Gas) betriebene Brennkraftmaschine, insbesondere Otto-Gas-motoren, mit einem Verdampfer (27), dem eine den Heizwert des Gases berücksichtigende Zumeßeinrichtung nachgeschaltet ist, bevor das Gas im Gasmischer (29) mit Luft vermischt wird und in die Brennkraftmaschine gelangt, dadurch gekennzeichnet, daß die Zumeßeinrichtung (37) als Kompensationsventil ausgelegt ist, in dem ein Kolbenventil integriert ist, wobei der Kolben (7) mit einer Schrägsteuerkante (34) versehen ist und über eine Zahnstange (18) verdreht wird, oder der kolben (7) eine gerade Steuerkante aufweist und in axialer Richtung über ein direkt angeflanschten Stellmagneten (41) betätigt wird.

2. Vorrichtung nach Anspruch 1, dadurch gekennzeichnet, daß das Kompensationsventil (1) einen variablen Durchtrittsquerschnitt in einer axialen Bohrung (31) aufweist.

3. Vorrichtung nach Anspruch 1, dadurch gekennzeichnet, daß die Geometrie des Durchtrittsquerschnittes in der axialen Bohrung (31) an die Zusammensetzung des Flüssiggases angepaßt ist.

4. Vorrichtung nach einem der vorhergehenden Ansprüche, dadurch gekennzeichnet, daß die Steuerkante (34, 36) in Abhängigkeit der Gastemperatur verstellbar ist.

5. Vorrichtung nach einem der vorhergehenden Ansprüche, dadurch gekennzeichnet, daß als Stellgröße der Flüssiggasdruck aus dem Mischungsverhältnis von Propan/Butan dient.

6. Vorrichtung nach einem der vorhergehenden Ansprüche, dadurch gekennzeichnet, daß durch Meßwertumformer (35) die Übertragung der Gastemperatur und des Gasdruckes aus dem Gasbehälter (23) auf das Kompensationsventil (1) erfolgt.

7. Vorrichtung nach einem der vorhergehenden Ansprüche, dadurch gekennzeichnet, daß die Vorrichtung an Dual/Fuel-Brennkraftmaschinen anwendbar ist.

## Claims

A. A device for controlling the power of an internal combustion engine, more particularly spark-ignition gas engines, driven by liquefied gas in which the main constituents are propane end butane (LPG = liquefied petroleum gas), the device comprising an evaporator (27) followed by a proportioning device which takes account of the calorific value of the gas before the gas is mixed with air in the gas mixer (29) and enters the engine, characterised in that the proportioning device (37) is a compensation valve incorporating a piston valve, the piston (7) having an inclined guiding edge (34) and being rotated by means of a rack (18), or the piston (7) having a straight guiding edge and being actuated in the axial direction by means of a directly flange-mounted operating magnet (41).

2. A device according to claim 1, characterised in that the compensation valve (1) has a variable cross-sectional area in an axial bore (31).

3. A device according to claim 1, characterised in that the shape of the cross-sectional area in the axial bore (31) is adapted to the composition of the liquefied gas.

4. A device according to any of the preceding claims, characterised in that the guiding edge (34, 36) is adjustable in dependence on the gas temperature.

5. A device according to any of the preceding claims, characterised in that the manipulated variable is the pressure or liquefied gas depending on the proportions of the mixture of propane and butane.

6. A device according to any of the preceding claims, characterised in that transformers (35) are used to transfer the gas temperature and gas pressure from the gas container (23) to the compensation valve (1).

7. A device according to any of the preceding claims, characterised in that the device is applicable to dual-fuel internal combustion engines.

## Revendications

1. Dispositif pour commander la puissance de moteur à combustion interne utilisant du gaz liquéfié composé principalement de propane/butane (gaz GPL-gaz de pétrole liquéfié) et en particulier des moteurs à allumage extérieur alimentés en gaz comportant un évaporateur (27) suivi d'un dispositif de dosage tenant compte du pouvoir calorifique du gaz avant que le gaz ne soit mélangé à l'air dans un mélangeur de gaz (29) et arrive dans le moteur à combustion interne, dispositif caractérisé en ce que le dispositif de dosage (37) est une soupape de compensation dans laquelle est intégrée une soupape en forme de piston, le piston (7) ayant une arête de commande en biais (34), et étant pivoté par une crémaillère (18) ou encore le piston (7) comportant une arête de commande droite et étant actionné dans la direction axiale par un électro-aimant de réglage (41) fixé directement sur la soupape.

2. Dispositif selon la revendication 1, caractérisé en ce que la soupape de compensation (1) présente une section de passage variable dans un perçage axial (31).

3. Dispositif selon la revendication 1, caractérisé en ce que la géométrie de la section de passage dans le perçage axial (31) est adaptée à la composition du gaz liquéfié.

4. Dispositif selon l'une des revendications précédentes, caractérisé en ce que l'arête de commande (34, 36) est réglable en fonction de la température du gaz.

5. Dispositif selon l'une des revendications précédentes, caractérisé en ce que la grandeur de réglage est la pression du gaz liquéfié à partir du rapport de mélange propane/butane.

6. Dispositif selon l'une des revendications précédentes, caractérisé en ce qu'un convertisseur de grandeur de mesure (35) transmet la température du gaz et la pression du gaz du réservoir à gaz (23) à la soupape de compensation (1).

7. Dispositif selon l'une des revendications précédentes, caractérisé en ce qu'il est applicable à des moteurs à combustion interne à deux carburants.

Fig. 1

Fig. 2

Fig. 3

Fig. 4

Dampfdruckkurven

Fig. 5

# Nennleistungsverlauf in Abhängigkeit von Gemischzusammensetzung und Umgebungstemperatur

Fig. 6